Europäisches Patentamt

European Patent Office

Office européen des brevets

(11) Numéro de publication: **0 148 655**
**A1**

# (12) DEMANDE DE BREVET EUROPEEN

(21) Numéro de dépôt: **84402338.2**

(22) Date de dépôt: **16.11.84**

(51) Int. Cl.⁴: **G 05 D 23/24, H 05 B 1/02**

(30) Priorité: **04.01.84 FR 8400063**

(43) Date de publication de la demande: **17.07.85**
**Bulletin 85/29**

(84) Etats contractants désignés: **BE DE FR GB IT NL**

(71) Demandeur: **SEB S.A., F-21260 Selongey (FR)**

(72) Inventeur: **Schwob, Pierre, 55, Avenue des Frères Lumière, F-69008 Lyon (FR)**
Inventeur: **Debourg, Jean-Pierre, 324, Avenue Berthelot, F-69008 Lyon (FR)**

(74) Mandataire: **Bouju, André, 38 Avenue de la Grande Armée, F-75017 Paris (FR)**

(54) Dispositif et procédé de contrôle et de régulation de la température d'une résistance électrique chauffante.

㊼ Le dispositif est destiné au contrôle et à la régulation de la température d'une résistance électrique chauffante (5).

Cette résistance chauffante fait partie d'un pont de Wheatstone comprenant une résistance réglable (10) par l'utilisateur. Ce pont de Wheatstone est relié à un comparateur (12) qui compare la valeur de la résistance chauffante (5) avec la valeur de consigne de la résistance réglable (10) et délivre un signal lorsque ces deux valeurs sont égales. Le comparateur (12) est relié d'autre part à un circuit de temporisation (14) qui maintient la coupure de l'alimentation électrique pendant une durée prédéterminée et la rétablit au bout de cette durée.

Utilisation notamment pour le réglage de la température de chauffage d'une couverture chauffante.

EP 0 148 655 A1

ACTORUM AG

**"Dispositif et procédé de contrôle et de régulation de la température d'une résistance électrique chauffante"**

La présente invention concerne un dispositif et un procédé de contrôle et de régulation de la température d'une résistance électrique chauffante.

L'invention vise en particulier, mais non limitativement, l'application du dispositif au contrôle et à la régulation de la température de chauffage de la résistance d'une couverture chauffante.

On connaît actuellement différents dispositifs pour régler la température de chauffage d'une résistance chauffante faisant partie de divers appareils de chauffage.

Dans la plupart de ces dispositifs, on utilise un capteur de température séparé de la résistance chauffante. Ce dispositif est actuellement utilisé notamment dans les couvertures chauffantes. Ce capteur est placé à l'intérieur de la couverture chauffante et crée une gêne pour l'utilisateur en raison de son encombrement. De plus, étant donné son emplacement en un point déterminé de la couverture chauffante, ce capteur est sensible à la température régnant en ce point, qui ne correspond pas forcément à la température en d'autres points, de sorte que ce capteur ne permet pas une régulation optimale du chauffage de la couverture.

Dans un autre dispositif de régulation connu, on utilise un élément chauffant auto-régulant par variation importante de sa résistance avec la température, tel qu'une résistance en céramique à coefficient de température positif.

Cependant, de tels éléments chauffants ne sont pas utilisables dans le cas des couvertures chauffantes.

Dans un autre dispositif de régulation connu, on utilise la variation dimensionnelle de l'élément chauffant pour régler sa température. Cependant, cette variation dimensionnelle est incompatible avec l'utilisation d'un tel dispositif dans un appareil de chauffage souple tel qu'une couverture chauffante.

2

On connaît d'autre part selon le brevet français 1 548 722 un dispositif de régulation de la température d'une résistance chauffante, comprenant des moyens pour couper l'alimentation de cette résistance lorsque la température de celle-ci atteint un certain seuil réglable et des moyens de temporisation pour maintenir cette coupure pendant une durée prédéterminée et pour rétablir cette alimentation au bout de cette durée.

Dans ce dispositif, on effectue une mesure de l'intensité du courant qui parcourt l'élément chauffant, en supposant que la résistance de cet élément soit une fonction de cette intensité. Cela n'est vrai qu'à la condition que la tension d'alimentation reste constante. Or, des variations importantes de la tension du secteur peuvent apparaître sur les réseaux d'une part et sur les secteurs d'autre part. On peut donc enregistrer une variation de la tension du secteur suffisamment importante pour fausser la mesure et ayant ainsi des conséquences graves, particulièrement dans le cas des couvertures chauffantes dans lesquelles on cherche à obtenir une sécurité absolue des utilisateurs.

Le but de la présente invention est de remédier aux inconvénients des réalisations connues, en créant un dispositif de contrôle et de régulation de la température d'une résistance électrique chauffante, qui ne comporte pas de capteur de température distinct de la résistance chauffante, qui permette de régler la température de façon optimale sur toute la surface chauffante de l'appareil utilisant cette résistance, qui s'affranchisse complètement des fluctuations de la tension d'alimentation de la résistance chauffante, ce qui évite tout risque de surchauffe et d'accident et qui, de ce fait, est particulièrement adapté à son utilisation dans les couvertures chauffantes.

Suivant l'invention, ce dispositif est caractérisé en ce que sa résistance chauffante fait partie d'un pont de Wheatstone comprenant une résistance réglable en fonction de la température de chauffage désirée pour la résistance chauffante, en ce que le pont de Wheatstone est relié à un comparateur comprenant des moyens pour comparer la valeur de la résistance chauffante avec la valeur de consigne de la résistance réglable et pour délivrer un signal lorsque la valeur de la résistance chauffante est égale à la valeur de consigne pour commander la coupure de l'alimentation électrique de la résistance chauffante, et en ce que ce comparateur est relié aux moyens de temporisation..

Ainsi, lorsque la résistance chauffante est alimentée, le comparateur compare la valeur ohmique de cette résistance chauffante avec la valeur de consigne déterminée par la résistance réglable et correspondant à la température de chauffage choisie par l'utilisateur.

Lorsque cette valeur de consigne est atteinte, le comparateur coupe l'alimentation électrique pendant une durée définie par le circuit électronique de temporisation. Lorsque cette durée est écoulée, l'alimentation de la résistance chauffante est rétablie. Cette alimentation est maintenue ou non suivant que la valeur ohmique de la résistance chauffante mesurée par le comparateur est inférieure ou égale à la valeur de consigne.

Par conséquent, les durées de chauffage de la résistance varient tandis que les durées d'arrêt du chauffage sont constantes. Ainsi, le dispositif conforme à l'invention, permet de régler parfaitement la température de chauffage de la résistance chauffante, sans utiliser un capteur extérieur à la résistance.

De plus, dans le dispositif conforme à l'invention, on mesure directement la résistance de chauffage qui est incorporée dans un pont de Wheatstone et c'est la valeur réelle de cette résistance qui est comparée avec celle de la résistance réglable et assure le fonctionnement du dispositif.

De cette façon, le dispositif s'affranchit complètement des fluctuations de la tension d'alimentation de la résistance chauffante, ce qui évite tout risque de surchauffe et d'accident, notamment dans le cas d'une couverture chauffante.

Selon une version avantageuse de l'invention, l'entrée du comparateur reliée à la résistance chauffante est branchée en parallèle avec une résistance directement reliée à l'alimentation électrique basse tension continue du dispositif, cette résistance étant adaptée pour que le comparateur puisse détecter pour la résistance chauffante une valeur inférieure à la valeur de consigne, lorsque l'alimentation du pont de Wheatstone est coupée.

Cette résistance force le comparateur à considérer que la résistance chauffante est trop froide, en l'absence d'alimentation électrique du pont de Wheatstone.

Selon une version préférée de l'invention, le circuit électronique est relié à un amplificateur capable de transformer en signal rectangulaire, le signal issu du circuit de temporisation et cet amplificateur est relié par l'intermédiaire de portes à deux thyristors commandant l'alimentation électrique de la résistance chauffante et du pont de Wheatstone.

Dans une version particulièrement adaptée au contrôle et à la régulation de la température de la résistance chauffante d'une couverture chauffante, le dispositif comprend un fil conducteur qui suit le trajet de la résistance chauffante et est séparé de celle-ci par une matière thermo-sensible, ce fil conducteur étant relié à un circuit comprenant des moyens pour mesurer les courants de fuite entre ce fil et la résistance chauffante et pour couper l'alimentation électrique de la résistance lorsque les courants de fuite atteignent une valeur de consigne déterminée.

Ce dispositif évite ainsi les accidents pouvant être causés à l'utilisateur en cas de défaillance locale de la résistance chauffante.

D'autres particularités et avantages de l'invention apparaîtront encore dans la description ci-après.

Aux dessins annexés donnés à titre d'exemples non limitatifs :

- la figure 1 est le schéma électrique d'un dispositif de contrôle et de régulation conforme à l'invention,

- la figure 2 est le schéma d'un circuit électrique auxiliaire de sécurité pouvant être incorporé à celui de la figure 1,

- la figure 3 est une vue schématique en plan, avec arrachements, d'une couverture chauffante comportant un dispositif selon l'invention,

- la figure 4 est une vue en perspective à échelle agrandie d'une partie de l'élément chauffant de la couverture chauffante.

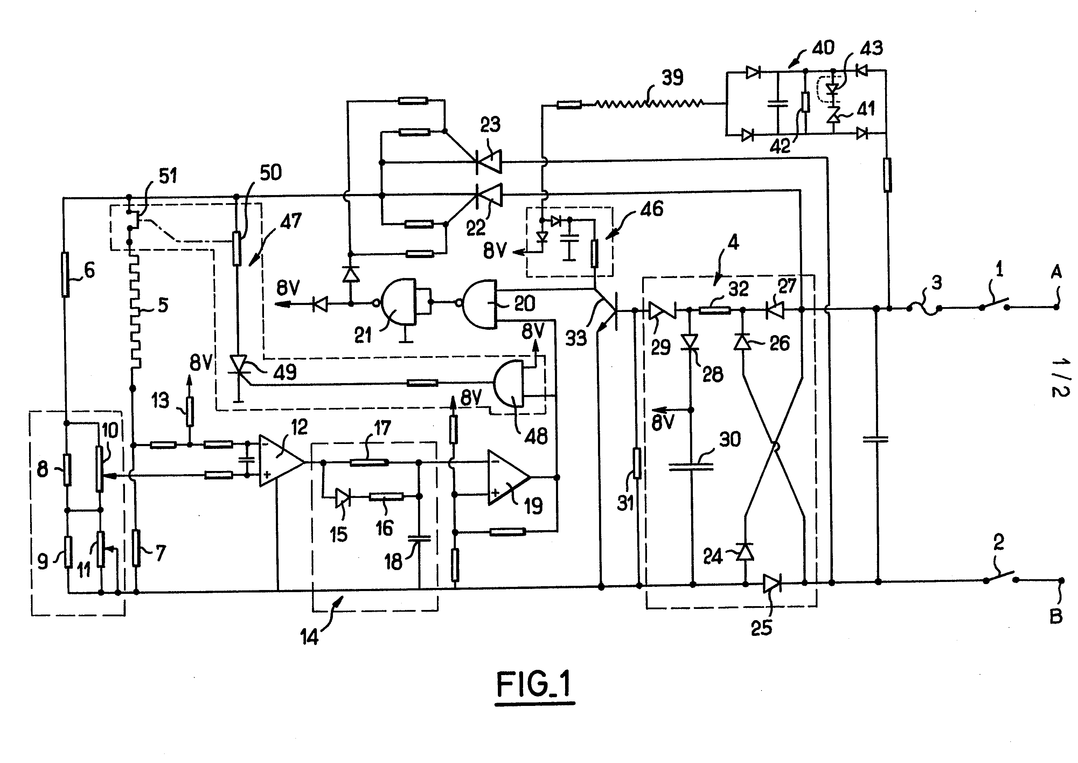

Sur le schéma électrique de la figure 1, A et B désignent les bornes du circuit raccordées à la tension du secteur, qui sont reliées par l'intermédiaire d'interrupteurs 1, 2 et d'un fusible 3 à un circuit d'alimentation 4 qui transforme la tension du secteur en une tension continue de valeur basse par exemple égale à 8 Volts qui alimente les composants électroniques du dispositif conforme à l'invention.

Ce dispositif comprend une résistance chauffante 5 présentant un coefficient de température $a$ appréciable dans la gamme de température d'utilisation de cette résistance. La valeur ohmique R de cette résistance varie en fonction de la température selon la relation $R = R_0 [1 + a (t - t_0)]$, $R_0$ étant la valeur ohmique à la température $t_0$.

La résistance chauffante 5 fait partie d'un pont de Wheatstone qui comprend, outre cette résistance 5, deux résistances 6 et 7 et un groupe de quatre résistances 8, 9, 10, 11.

Parmi ces résistances, la résistance 11 est ajustable lors de la construction du circuit électronique et la résistance 10 est réglable par l'utilisateur, en fonction de la température de chauffage désirée.

Les entrées - et + d'un comparateur électronique 12 sont reliées au pont de Wheatstone respectivement entre la résistance chauffante 5 et la résistance fixe 7 et à la résistance réglable 10.

Ainsi, ce comparateur 12 détecte la valeur ohmique de la résistance chauffante 5 et la compare avec la valeur de consigne de la résistance réglable 10.

Ce comparateur 12 est d'autre part adapté pour délivrer à sa sortie un signal lorsque la valeur de la résistance chauffante 5 est égale ou légèrement supérieure à la valeur de consigne de la résistance réglable 10, c'est-à-dire lorsque le pont de Wheatstone est équilibré.

A l'entrée - du comparateur 12 est branchée en parallèle, une résistance 13 reliée directement à la tension de 8 Volts délivrée par le circuit d'alimentation 4. Cette résistance 13 est déterminée pour que le comparateur 12 détecte pour la résistance chauffante 5 une valeur inférieure à la valeur de consigne, lorsque l'alimentation du pont de Wheatstone est coupée. Autrement dit, cette résistance 13 force le comparateur 12 à considérer que la résistance 5 est trop froide, en l'absence d'alimentation du pont de Wheatstone.

La sortie du comparateur 12 est reliée à un circuit électronique de temporisation 14 qui est adapté pour maintenir la coupure de l'alimentation électrique de la résistance chauffante 5 pendant une durée constante prédéterminée, par exemple de quelques secondes et rétablir cette alimentation électrique au bout de cette durée.

Ce circuit de temporisation 14 comprend une diode 15 en série avec une résistance 16 de faible valeur ohmique, qui sont branchées en parallèle avec une résistance 17 de forte valeur ohmique, en série avec un condensateur 18.

La sortie du circuit de temporisation 14 est reliée à un amplificateur 19 chargé de transformer le signal électrique délivré par le circuit de temporisation en un signal rectangulaire.

Cet amplificateur 19 est relié par l'intermédiaire de portes 20 et 21 à deux thyristors 22, 23 qui commandent l'alimentation électrique de la résistance chauffante 5 et du pont de Wheatstone.

Le circuit d'alimentation 4 en tension continue de 8 volts comprend de façon classique des diodes telles que 24, 25, 26, 27, 28, 29, un condensateur 30 et des résistances 31, 32.

La sortie de ce circuit 4 reliée à la porte 20 comporte un transistor 33 capable de détecter le passage à zéro de la tension du secteur appliquée aux bornes A et B de façon à autoriser la commande des thyristors 22 et 23 seulement lors du passage à zéro de cette tension du secteur, ce qui permet d'éviter les parasites.

Le fonctionnement du dispositif que l'on vient de décrire est le suivant.

Après mise en marche du dispositif au moyen des interrupteurs 1, 2, la résistance 13 fait en sorte que le comparateur 12 détecte une valeur de résistance correspondant à une température trop froide, ce qui a pour effet de commander les thyristors 22 et 23 ainsi que l'alimentation électrique de la résistance chauffante 5. Cette résistance 5 chauffe alors jusqu'à ce que sa valeur ohmique atteigne la valeur d'équilibre du pont définie par la valeur de la résistance réglable 10 correspondant à la température de consigne désirée par l'utilisateur.

8

A ce moment, le comparateur 12 délivre un signal qui arrête la commande des thyristors 22 et 23, de sorte que la résistance chauffante 5 qui n'est plus alimentée, commence à refroidir.

Cependant, la résistance 13, en l'absence d'alimentation du pont de Wheatstone fait en sorte que la résistance 5 est considérée comme trop froide, et de ce fait le comparateur 12 délivre immédiatement un signal qui commande les thyristors 22 et 23.

Le circuit de temporisation 14 intervient après la première coupure des thyristors 22 et 23.

Lorsque la résistance 5 devient trop chaude, le signal émis par le comparateur 12 traverse la diode 15, puis la résistance de faible valeur 16 et charge immédiatement le condensateur 18. Le signal est donc immédiatement transmis vers les thyristors 22 et 23 par le circuit 14. Cependant, lorsque le signal disparaît, le condensateur 18 se décharge lentement par la résistance de forte valeur 17. Ainsi, ce signal ne disparaît pas aussi vite à la sortie du circuit 14 qu'à son entrée, de sorte que l'on obtient une temporisation à l'arrêt du signal.

Les thyristors 22 et 23 ne sont plus réenclenchés avant la fin de la durée (égale à quelques secondes), de la temporisation. A l'expiration de cette durée, la résistance chauffante 5 est à nouveau alimentée et le comparateur 12 coupe immédiatement l'alimentation si cette résistance est trop chaude ou maintient cette alimentation si cette résistance est trop froide. Le cycle de fonctionnement du dispositif se poursuit ensuite comme indiqué ci-dessus.

Le fonctionnement du dispositif selon l'invention est par conséquent similaire de celui d'un thermostat sans période propre mais avec une durée d'alimentation variable et une durée de coupure de l'alimentation constante, déterminée par le circuit de temporisation 14.

Le circuit de régulation de la température conforme à l'invention ne nécessite par conséquent aucun capteur de température extérieur à l'élément chauffant dont on veut régler la température.

Le dispositif conforme à l'invention est ainsi particulièrement bien adapté à la régulation de la température de chauffage d'une couverture chauffante.

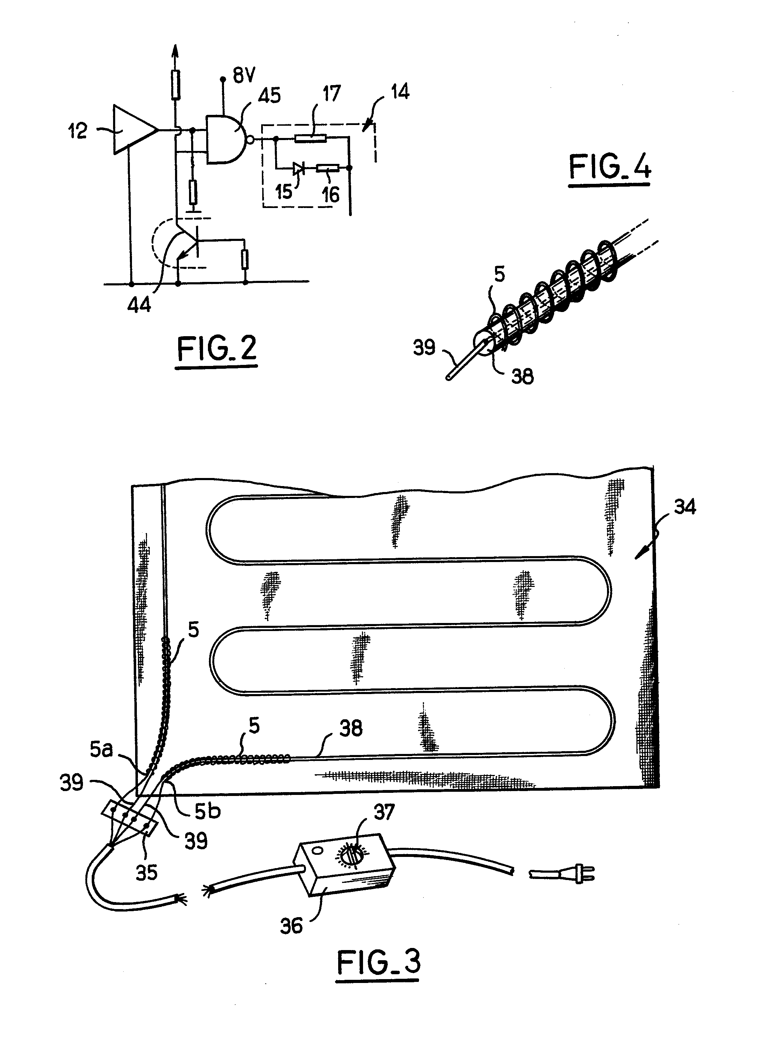

Sur le schéma de la figure 3, la couverture chauffante 34 comporte une résistance chauffante 5 qui s'étend en son intérieur suivant un parcours sinueux classique. Les deux extrémités 5a et 5b de la résistance 5 sont raccordées par l'intermédiaire d'une plaquette de connexion 35 à un boîtier 36 renfermant le circuit électronique de contrôle et de régulation décrit ci-dessus.

Ce boîtier 36 comporte un bouton de réglage 37 accessible à l'utilisateur qui permet d'ajuster la résistance 10 à la valeur correspondant à la température choisie.

Dans cette réalisation, la résistance chauffante 5 est enroulée hélicoïdalement autour d'une tige souple 38 (voir figure 4) en matière thermo-sensible telle que du polyamide.

La résistance chauffante 5 est entourée par une gaine en matière électriquement isolante, non représentée, qui sépare cette résistance du tissu de la couverture.

La tige souple 38 est traversée axialement par un fil conducteur 39 qui suit la résistance 5 tout au long de son parcours.

Ce fil conducteur 39 (voir figure 1) est relié à un circuit 40 adapté pour mesurer les courants de fuite entre ce fil et la résistance chauffante 5 et pour couper l'alimentation électrique de cette résistance lorsque ces courants de fuite atteignent une valeur de consigne déterminée, de façon à éviter tout risque de surchauffe locale dangereuse pour l'utilisateur.

La valeur de consigne ci-dessus est déterminée par une diode Zener 41 et une résistance 42.

Le circuit 40 comporte également une diode IR 43 reliée à un circuit opto-électronique comportant un transistor 44 (voir figure 2) lui-même relié à une porte NAND 45 intercalée entre le comparateur 12 et le circuit de temporisation 14.

Lorsque les courants de fuite entre le fil conducteur 39 et la résistance 5 atteignent la valeur de consigne, le circuit 40 bloque l'alimentation électrique de la résistance chauffante 5 au moyen de la porte 45.

Dans le cas de l'exemple représenté sur la figure 1, le dispositif comprend en outre un circuit 46 pour détecter la continuité du fil conducteur 39.

Le dispositif représenté sur la figure 1 appliqué au contrôle du chauffage d'une couverture chauffante, comprend en outre un circuit 47 qui comporte une porte 48 reliée d'une part à la sortie de l'amplificateur 19 et d'autre part à un thyristor 49 en série avec une résistance 50 et un limiteur thermique 51 branché en série avec la résistance chauffante 5.

Ce circuit 47 permet de couper l'alimentation électrique de la résistance 5 en cas de panne des thyristors 22 et 23.

Lorsque la résistance 5 est alimentée, l'un des thyristors 23 et 22 conduit pendant une demie période du courant secteur, tandis que l'autre est polarisé en sens inverse. Pendant l'alternance suivante, les rôles sont inversés. Si l'un des thyristors 22 ou 23 se met en court circuit interne (défaut de fabrication ou accident) alors, lorsqu'il devrait être polarisé en sens inverse et empêcher le passage du courant, il le laisse passer, mettant ainsi l'alimentation en court circuit, ce qui fait fondre le fusible 3. Le circuit et la résistance 5 sont ainsi protégés naturellement d'une défaillance des thyristors de puissance, ce qui constitue un avantage appréciable par rapport à l'emploi d'un seul élément triac ou thyristor.

Ainsi, le dispositif conforme à l'invention comprend différents circuits assurant une entière sécurité à l'utilisateur de la couverture chauffante.

On donne ci-après à titre d'exemple numérique, les caractéristiques principales d'un dispositif conforme à l'invention appliquées à la régulation de la température d'une couverture chauffante.

Résistance chauffante 5 : fil de nickel ayant un coefficient de température égal à 0,005, dont la résistance est égale à 310 ohms à 20°C et à 410 ohms à 90°C.

Résistance 7 : 2,2 ohms

Résistance 6 : 330 kilo-ohms

Résistance 8 : 560 ohms

Résistance 9 : 2,2 kilo-ohms

Résistance 10 : 22 kilo-ohms

Bien entendu, l'invention n'est pas limitée à l'exemple que l'on vient de décrire qui s'applique à la régulation de la température d'une couverture chauffante et on peut apporter à cet exemple de nombreuses modifications sans sortir du cadre de l'invention.

Ainsi, non seulement l'invention peut s'appliquer aux articles chauffants souples tels que les ceintures chauffantes et les vêtements chauffants, mais également à tous les appareils à résistance chauffante, tels que les radiateurs électriques et les ustensiles de cuisson chauffants.

0148655

## REVENDICATIONS

1. Dispositif de contrôle et de régulation de la température d'une résistance électrique chauffante (5), dans lequel la résistance chauffante (5) présente un coefficient de température appréciable dans la gamme de température d'utilisation de cette résistance, comprenant des moyens pour couper l'alimentation de cette résistance lorsque la température de celle-ci atteint un certain seuil réglable et des moyens de temporisation (14) pour maintenir cette coupure pendant une durée prédéterminée et pour rétablir cette alimentation au bout de cette durée, caractérisé en ce que cette résistance fait partie d'un pont de Wheatstone comprenant une résistance réglable (10) en fonction de la température de chauffage désirée pour la résistance chauffante, en ce que le pont de Wheatstone est relié à un comparateur (12) comprenant des moyens pour comparer la valeur de la résistance chauffante (5) avec la valeur de consigne de la résistance réglable (10) pour délivrer un signal lorsque ces deux valeurs sont égales et pour commander la coupure de l'alimentation électrique de la résistance chauffante, et en ce que ce comparateur est relié aux moyens de temporisation (14).

2. Dispositif conforme à la revendication 1, caractérisé en ce que l'entrée du comparateur (12) reliée à la résistance chauffante (5) est branchée en parallèle avec une résistance (13) directement reliée à l'alimentation électrique en basse tension continue du dispositif, cette résistance (13) étant adaptée pour que le comparateur (12) puisse détecter pour la résistance chauffante (5) une valeur inférieure à la valeur de consigne, lorsque l'alimentation du pont de Wheatstone est coupée.

3. Dispositif conforme à l'une des revendications 1 ou 2, caractérisé en ce que le circuit électronique de temporisation (14) comprend une diode (15) en série avec une résistance (16) et un condensateur (18), cette diode et cette résistance étant branchées en parallèle avec une résistance (17) de valeur ohmique plus élevée que celle de la première résistance (16).

4. Dispositif conforme à l'une des revendications 1 à 3, caractérisé en ce que ce circuit électronique (14) est relié à un amplificateur (19) capable de transformer en signal rectangulaire, le signal issu du circuit de temporisation (14).

5. Dispositif conforme à la revendication 4, caractérisé en ce que l'amplificateur (19) est relié par l'intermédiaire de portes (20 et 21) à des thyristors (22, 23) commandant l'alimentation électrique de la résistance chauffante (5) et du pont de Wheatstone.

6. Dispositif conforme à la revendication 5, caractérisé en ce que le circuit (4) d'alimentation en basse tension continue est relié à l'une (20) des portes au moyen d'un transistor (33) apte à détecter le passage à zéro de la tension du secteur, de façon à autoriser la commande des thyristors (22, 23), seulement lors dudit passage à zéro.

7. Dispositif conforme à l'une des revendications 1 à 6, appliqué au contrôle et à la régulation de la température de la résistance chauffante (5) d'une couverture chauffante (34), caractérisé en ce qu'il comprend un fil conducteur (39) qui suit le trajet de la résistance chauffante (5) et est séparé de celle-ci par une matière thermo-sensible (38), ce fil conducteur (39) étant relié à un circuit (40) comprenant des moyens pour mesurer les courants de fuite entre ce fil et la résistance chauffante et pour couper l'alimentation électrique de la résistance lorsque les courants de fuite atteignent une valeur de consigne.

8. Dispositif conforme à la revendication 7, caractérisé en ce qu'il comprend en outre un circuit (46) comprenant des moyens pour détecter la continuité du fil conducteur (39).

9. Dispositif conforme à l'une des revendications 7 ou 8, caractérisé en ce qu'il comprend en outre un circuit (47) comprenant une porte (48) reliée d'une

0148655

part à l'amplificateur (19) et d'autre part à un thyristor (49) en série avec une résistance (50) et un limiteur thermique (51) relié au circuit d'alimentation de la résistance chauffante (5) et capable de couper cette alimentation en cas de panne des thyristors (22, 23) prévus pour commander cette alimentation.

FIG.1

1/2

0148655

FIG. 2

FIG. 4

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 548 722  (W. HOLZER)<br>* Page 2, colonne de gauche, lignes 13-20; page 3, colonne de droite, lignes 31-51; page 5, colonne de gauche, lignes 11-54; page 6, colonne de gauche, lignes 15-27; figures 2,6,9 * | 1,10 | G 05 D  23/19<br>H 05 B  1/02 |
| A | | 3,5-7 | |
| | --- | | |
| A | FR-A-2 011 635  (SCHNEEBERGER)<br>* Page 2, lignes 2-21; page 2, ligne 32 - page 3, ligne 19; figures 1,2 * | 7 | |
| | --- | | |
| A | GB-A-2 077 000  (MATSUSHITA)<br>* Page 1, ligne 31 - page 2, ligne 13; page 3, ligne 54 - page 5, ligne 110; figures 1,2,4 * | 7,8 | **DOMAINES TECHNIQUES RECHERCHES (Int. Cl.4)** |
| | --- | | |
| A | FR-A-2 125 915  (DUNLOP)<br>* Page 10, lignes 16-40; figure 1 * | 1,3 | G 05 D<br>H 05 B |
| | --- | | |
| A | US-A-4 086 466  (R. SCHARLACK)<br>* Résumé; figure 11 * | 1,3 | |
| | --- | | |
| A | DE-A-3 028 995  (BEURER GmbH)<br>* Page 7, ligne 1 - page 10, ligne 4; figure * | 1,7 | |
| | --- |  -/- | | |

Le présent rapport de recherche a été établi pour toutes les revendications

| Lieu de la recherche<br>LA HAYE | Date d'achèvement de la recherche<br>19-03-1985 | Examinateur<br>HELOT H.V. |
|---|---|---|

Office européen
des brevets

**RAPPORT DE RECHERCHE EUROPEENNE**

Numéro de la demande

EP 84 40 2338

| | **DOCUMENTS CONSIDERES COMME PERTINENTS** | | Page 2 |
|---|---|---|---|

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 237 243 (WAYNCO)<br>* Page 3, lignes 29-37; figure 1 * | 1,2 | |
| | ----- | | |
| | | | **DOMAINES TECHNIQUES RECHERCHES (Int. Cl.4)** |

Le présent rapport de recherche a été établi pour toutes les revendications

| Lieu de la recherche | Date d'achèvement de la recherche | Examinateur |
|---|---|---|
| LA HAYE | 19-03-1985 | HELOT H.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82